# EUROPÄISCHE PATENTANMELDUNG

(11) **EP 1 018 362 A2**
(43) Veröffentlichungstag der Anmeldung: **12.07.2000**
(21) Anmeldenummer: 99122910.5
(22) Anmeldetag: 18.11.1999
(51) Int. Cl.: B01D 67/00, C08J 7/12, A61M 1/16

(54) **Verfahren zur hydrophilen Beschichtung von Membranen**

(30) Priorität: 08.01.1999 DE 19900493
(71) Anmelder: CREAVIS Gesellschaft für Technologie und Innovation mbH, 45764 Marl (DE)
(72) Erfinder: Lohmer, Gunther, Dr., 45470 Mülheim (DE); Oles, Markus, Dr., 45525 Hattingen (DE)

(57) **Zusammenfassung**

Die Erfindung betrifft ein Verfahren zur Herstellung von dauerhaft hydrophilen Beschichtungen auf Membranen, wobei die Membrane zunächst mit einem Silanderivat und anschließend mit einer hydrophilen oder latent hydrophilen Verbindung umgesetzt wird, und die Oberfläche der Membrane nach der Umsetzung mit dem Silanderivat eine Strukturierung aufweist.

Weiterhin betrifft die Erfindung die Verwendung der beschichteten Membrane sowie Erzeugnisse, hergestellt aus den beschichteten Membranen.

## Beschreibung

Die Erfindung betrifft ein Verfahren zur dauerhaft hydrophilen Beschichtung von Membranen und die Verwendung dieser beschichteten Membranen.

Membrane, die für biologische oder medizinische Zwecke eingesetzt werden, müssen die verschiedensten Eigenschaften in sich vereinen. So werden z. B. extrakorporale Membranoxygenatoren als kurzfristiger Lungenersatz zur Aufrechterhaltung des Kreislaufes der Patienten verwendet. Das venöse Blut des Patienten wird durch eine künstliche Lunge gepumpt, wo es mit Sauerstoff beladen und von Kohlendioxid entladen wird, ehe es in den arteriellen Kreislauf zurückgepumpt wird.

Das Prinzip dieser Maschinen beruht auf einer Membrane, über die das venöse Blut auf der basolateralen Seite geleitet wird. Auf der apikalen Seite der Membrane liegt eine mit Sauerstoff gesättigte Umgebung vor. Wegen der unterschiedlichen Partialdrücke von Sauerstoff und CO₂ diffundiert Sauerstoff ins Blut und Kohlendioxid aus diesem heraus. Aufgrund der sehr geringen Differenzen der Partialdrücke wird, um einen ausreichenden Massenstrom zu gewährleisten, wie im physiologischen System (Lunge), eine Austauschfläche von mehreren qm benötigt.

Stand der Technik sind zur Zeit Oxygenator-Membranen aus Polypropylen. Poröse Hohl-Fasern oder Membran-Oxygenatoren aus Polypropylen (z. B. in EP 0 341 309 A1 beschrieben) werden heute häufig eingesetzt. Durch verschiedene Stapeltechniken können große Austauschflächen zur Verfügung gestellt werden. Poröse Hohl-Faser-Oxygenatoren aus Polyolefin können gemäß EP 0 005 886 A1 als künstliche Lunge eingesetzt werden. Das Blut fließt hier durch ein Bündel für Sauerstoff und CO₂ permeabler Hohl-Faser. Durch die hohe Zahl von Fasern wird eine genügend große Austauschfläche angeboten. Der Einsatz dieser Systeme birgt allerdings ein Krankheits- und Sterblichkeitsrisiko durch auftretende Infektionen, Thrombosen und Embolien sowie Blutungen durch Gerinnungsstörungen. Eine kleinere Austauschfläche würde hier sofort das Risiko reduzieren. Dies ist aber nur mit Materialien möglich, die einen höheren Diffüsionskoeffizienten bzw. Permeabilitätskoeffizienten für O₂ und CO₂ als z. B. Polypropylen aufweisen. Durch einen über 100 mal höheren Permeabilitätskoeffizienten kann sowohl die Austauschzeit als auch die Austauschfläche der Oxygenator-Membrane signifikant reduziert werden. Hierdurch reduziert sich ebenfalls das Krankheits- und Sterblichkeitsrisiko.

| Permeabilitätskoeffizienten in cm³ x cm x Pas | | |
|---|---|---|
| | O₂ | CO₂ |
| Polyethylen | 2,2 | 9,5 |
| Polypropylen | 1,7 | 6,9 |
| Polymethacrylate | 0,89 | 3,79 |
| Polydimethylsiloxane | 367 | 2430 |
| Aus "Polymer Handbook" edited by J. Brandrup and E.H. Immergut 3rd ed. 1989 John Wiley & Sons. | | |

Obwohl Polysilikone/Siloxane wie in der Tabelle gezeigt, sehr hohe Diffusionskoeffizienten für O₂ und CO₂ aufweisen, scheitert deren technischer Einsatz als Oxygenator-Membrane, da eine vollständige Benetzung der Oberfläche mit Blut oder einer anderen wäßrigen Lösung nicht möglich ist.

Weiter ist für den Einsatz im Bereich der Oxygenatoren zu fordern, daß die Oberflächen eine hohe Blutverträglichkeit besitzen. Wenn keine blutverträglichen Oberflächen vorhanden sind, können sich gesundheitsgefährdende Thromben bilden.

Aus einem anderen technischen Gebiet, der Herstellung von Kontaktlinsen, ist bekannt, daß durch eine nachträgliche Beschichtung des Linsenmaterials die Benetzung mit Tränenflüssigkeit erheblich verbessert werden kann. Diese zumeist hydrophilen Beschichtungen verbessern den Tragekomfort erheblich.

So beschreibt Robert et al. in EP 0 643 083 ein Verfahren zur Bildung eines hydrophilen IPN (interpenetrating network) auf einer Kontaktlinse, wobei eine Siliconlinse in einer Lösung von Acrylsäure, einem ungesättigten Vernetzer und einem Photoinitiator in einem geeigneten Lösungsmittel wie z. B. Hexan gequollen und mittels UV-Bestrahlung polymerisiert wird.

Desweiteren wurde von Merril et al. in US 3 916 033 und US 4 099 859 ein Verfahren beschrieben, bei dem mittels hochenergetischer inonisierender Strahlung eine hydrophile Beschichtungen auf Siliconelastomer-Kontaktlinsen aufgebracht werden.

Weiterhin wurde vorgeschlagen, durch Behandlung im Gas-Plasma hydrophile Monomere auf die Linsenoberfläche zu propfen. Ein solches Verfahren, das auch unter dem Begriff plasma-grafting geführt wird, ist von Chen et al. in US 4 143 949 beschrieben worden. Neben dem kostenintensiven hohen appartiven Aufwand ist die Kontrolle der Beschichtungsdicke schwierig. Zudem führen nicht umgesetzte Monomere in der Beschichtung zu Irritationen im Auge. Auch die Beständigkeit solcher Beschichtungen ist nicht immer gegeben.
EP 0 599 150 lehrt ein Verfahren, bei dem ein Substrat zunächst mit Chlorsilanen behandelt wird. Die Chlorsilane werden adsorbiert und nachträglich hydrolisiert. Auf diese Schicht kann eine weitere Schicht, z. B. Saccharide, Polyether oder Polyvinylamine chemisch gebunden werden. Das Verfahren wird insbesondere auf Glas als Substrat angewendet, da die Chlorsilane über fünktionelle Gruppen an das Substrat binden. Werden Substrate ohne fünktionelle Gruppen beschichtet, so muß vor der Beschichtung eine Aktivierung des Substrats z. B. mit UV-Strahlung durchgeführt werden.

In US 5 736 251 wird ein Verfahren zur Verbesserung der Gleitfähigkeit von Polymeren beschrieben. Die Polymeren werden, gegebenenfalls nach einer zusätzlichen Aktivierung, mit vernetzbaren Silanen behandelt und anschließend in Gegenwart von Wasser und gegebenenfalls eines Katalysators ausgehärtet. Dadurch bildet sich eine dicke vernetzte Siloxanschicht, die unter bestimmten Bedingungen auch inselförmige Erhebungen aufweisen kann. Die Gleitfähigkeit der so modifizierten Polymeren ist von der Art und Länge der Substituenten des Silans abhängig, wobei Substituenten mit mehr als 10 C-Atomen weniger effektiv sind als kurzkettige Substituenten. Zudem zeigen so beschichtete Polymere auch keine Hydrophilierung der Oberfläche.

Eine Anwendung dieser Techniken auf Membranen scheiterte bislang an der für eine Beschichtung unzugänglichen dreidimensionalen Topographie von Membranoberflächen. So müssen glatte Stellen ebenso gut wie Maschen, Poren oder Kanäle beschichtet werden.

Aufgabe der vorliegenden Erfindung war es daher, ein Verfahren zur dauerhaft hydrophilen Beschichtung von Membranen bereitzustellen, das einfach durchzuführen ist und Beschichtungen liefert, die für eine Verwendung der beschichteten Membrane in biologischen Systemen geeignet sind.

Überraschenderweise wurde gefunden, daß Membrane, bestehend aus polymeren Materialien oder mit einer Oberfläche aus polymeren Materialien durch sukzessives Umsetzen mit funktionalisierten Silanderivaten und einer hydrophilen oder latent hydrophilen Verbindung in einfacher Weise hydrophil beschichtet werden können.

Latent hydrophile Verbindungen im Sinne der vorliegenden Erfindung sind Verbindungen, die erst durch eine chemische Reaktion hydrophilen Charakter erhalten. Beispiele für solche latent hydrophilen Verbindungen sind Carbonsäureester, die durch Verseifung in die hydrophilen Carbonsäuren umgewandelt werden können. Ein anderes Beispiel für latent hydrophile Verbindungen sind Epoxide, da durch die Umsetzung mit dem funktionalisierten Silanderivat der Epoxidring geöffnet und eine hydrophile Hydroxygruppe als Endgruppe frei wird.

Gegenstand der vorliegenden Erfindung ist daher ein Verfahren zur Herstellung von hydrophilen Beschichtungen auf Membranen, wobei die Membrane zunächst mit einem Silanderivat der Formel (I)

[Y(R¹Z)ₘR²]ₙSiR³ₒX₄₋ₙ₋ₒ (I)

mit
- o =: 0 bis 2,
- n =: 0 bis (3 - o),
- m =: 0 bis 5
- R¹, R², R³ =: C₁-C₁₂-Alkylrest, C₂-C₁₂-Alkylenrest, Phenylrest oder Phenylalkylrest,
wobei R² und R³ jeweils gleich oder verschieden zu R¹ sind,
- Y =: HS-, H₂N-, HR¹N- R¹₂N-, -Cl, -Br, -I, -CN, R¹S-, 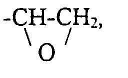 -SO₂Cl, OCN-, -CO₂R¹, -SCN
- Z =: -S-, -O-, R¹N-, HN-,
- X =: F-, Cl-, Br-, I-, R⁴O-, HO-, H-, -NR₂¹
mit
- R⁴ =: C₁-C₆-Alkylrest,
C₂-C₈-Alkoxyrest,
C₅-C₇-cycloaliphatischer Rest,
-C(O)R¹,
-Si(CH₃)₃
Phenylrest oder Phenylalkylrest,
und anschließend mit einer hydrophilen oder latent hydrophilen Verbindung umgesetzt werden, wobei die Oberfläche der Membrane nach der Umsetzung mit dem Silanderivat eine Strukturierung aufweist.

Durch die erfindungsgemäße Hydrophilierung von Membranen können diese auch mit polaren Medien verwendet werden. Bei Einsatz von hydrophoben Membranen mit polaren Medien bilden sich Glasbläschen, die auf der Membranoberfläche adhärieren und den weiteren Gasaustausch behindern. Insbesondere beim Einsatz hydrophober Membranen im Blutkreislauf besteht beim Ablösen von Gasblasen die Gefahr von Embolien.

Folgende Silanderivate sind für die Durchführung des erfindungsgemäßen Verfahrens besonders geeignet:
H₂NC₃H₆Si(OCH₃)₃,
H₂NC₂H₄NHC₃H₆Si(OCH₃)₃,
HSC₃H₆Si(OCH₃)₃,
H₂NC₂H₄NHC₂H₄NHC₃H₆Si(OCH₃)₃,
(CH₃)₂NC₃H₆Si(OCH₃)₃,
H₂N(C₆H₄)C₃H₆Si(OCH₃)₃,
H₂NC₂H₄NHC₂H₄(C₆H₄)C₃H₆Si(OCH₃)₃,

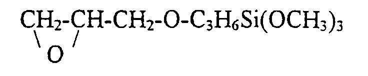

Weiterhin ist Gegenstand der vorliegenden Erfindung die Verwendung von erfindungsgemäß beschichteten Membranen, zur Herstellung von Erzeugnissen zur Verwendung in der Medizintechnik.

Das erfindungsgemäße Verfahren bietet gegenüber den herkömmlichen Verfahren entscheidende Vorteile:
Die eingesetzten Silanderivate bilden keinen durchgehenden Film auf der Membranoberfläche, sondern isolierte Tropfen. Diese Tropfen können einen Durchmesser von circa 0.1-30 µm haben, weisen eine enge Verteilung auf und sind mit der Membranoberfläche fest, zum Teil kovalent, verbunden. Der mittlere Tropfendurchmesser kann durch Variation der Beschichtungsparameter eingestellt werden. An der Oberfläche der Tropfen befinden sich die funktionellen Gruppen (Y in Formel I) des eingesetzten Silanderivats, die für eine weitere chemische Umsetzung dort zugänglich sind. Setzt man nun diese Gruppen mit einer monomeren oder polymeren hydrophilen oder latent hydrophilen Verbindung um, so entsteht eine chemische oder physikalische Anbindung dieser Verbindung über das Silanderivat zur Membrane.

Die Bildung der Tropfen bewirkt eine Mikrostrukturierung der Membranoberfläche und damit verbunden eine makroskopische oberflächliche Hydrophilierung. Es bleiben aber genügend unbehandelte Stellen auf der Oberfläche zurück, so daß die physiologischen oder mechanischen Eigenschaften der Membrane nicht wesentlich verändert werden.

Die Anwendung des Silanderivats auf der Membranoberfläche erfolgt vorzugsweise in Lösung. Dabei kann das Lösungsmittel auch als zusätzliches Quellungsmittel wirken. Lösungen im Bereich von 0.1-5.0 Vol% Silanderivat, vorzugsweise in Hexan als Lösungsmittel, haben sich in der Praxis bewährt. Aber auch andere, das Substrat quellende Lösungsmittel wie z. B. Tetrahydrofuran, Cyclohexan oder Toluol sind im erfindungsgemäßen Verfahren einsetzbar.

Man taucht die zu behandelnde Membrane in eine solche Lösung des Silanderivats ca. 1 s bis 10 min oder bis zur vollständigen Quellung der Membrane, vorzugsweise 1-150 s bei 20-25 °C ein und trocknet anschließend.

Während des Trocknungsprozesses muß keine bestimmte Temperatur eingehalten werden; Raumtemperatur (20-25 °C) ist in den meisten Fällen ausreichend. Vorteilhaft ist jedoch eine Thermostatisierung abhängig vom Dampfdruck des Lösungsmittels im Bereich von 0 bis 40 °C während der Trocknung. Der Trocknungsprozeß kann unter Schutzgas oder auch an Luft durchgeführt werden, wobei eine staubfreie Atmosphäre zu empfehlen ist.

In bestimmten Fällen, bei denen nur gewünschte Flächen behandelt werden sollen, kann das Eintauchen auch teilweise erfolgen. Alternativ zum Eintauchen kann der Auftrag des Silanderivats auch durch Besprühen oder durch Aufstreichen erfolgen.

Das Silanderivat kann aber auch lösungsmittelfrei aus der Gasphase auf der Membranoberfläche abgeschieden werden. Hier sind ggf. längere Reaktions- oder Quellungszeiten einzuhalten, auf den Trocknungsschritt kann hier verzichtet werden.

Nach Umsetzen der Membrane mit dem Silanderivat gemäß Formel I kann die so erhaltene, strukturierte Oberfläche, die eine Beschichtung in Form einer Tropfenschicht aufweist, hydrolysiert werden. Diese Hydrolyse kann während oder auch nach dem Trocknen erfolgen. Zweckmäßig erfolgt die Hydrolyse während des Trocknens an Luft, da der Wassergehalt der Luft in der Regel eine weitgehende Hydrolyse ermöglicht. Eine andere Möglichkeit besteht darin, nach erfolgter Trocknung eine schonende Wasserdampfbehandlung des beschichteten Substrats durchzuführen. Die Hydrolyse soll möglichst vollständig sein. Da auch ausgesprochen hydrophobe Membrane mittels des erfindungsgemäßen Verfahrens beschichtet werden können, ist auch mit einer nicht vollständigen Hydrolyse zu rechnen. Hydrolysezeiten an Luft von 4 Stunden haben sich in der Praxis bewährt. Bei einer Wasserdampfbehandlung ist von ca. 2 Stunden Behandlungszeit auszugehen. An die Hydrolyse der beschichteten Membrane kann sich eine Trocknung bei 40-150 °C, bevorzugt bei 70-130 °C, anschließen.

Nach der Umsetzung der Membrane mit dem Silanderivat, der Hydrolyse und eventuell abschließender Trocknung bei erhöhter Temperatur erfolgt die Behandlung mit der hydrophilen oder latent hydrophilen Verbindung.

Im erfindungsgemäßen Verfahren können alle hydrophilen oder latent hydrophilen Verbindungen eingesetzt werden, die nach der Behandlung mit dem Silanderivat eine ionische, adsorptive und oder kovalente Bindung eingehen und direkt oder nach einer zusätzlichen chemischen Umsetzung eine ausreichende Benetzung mit Wasser gewahrleisten Im Falle von Epoxiden, insbesondere Ethylenoxid, wird durch die Ringöffnung des Epoxids eine Polymerisation des Epoxides auf die funktionelle Gruppe Y des Silanderivates initiiert. Es resultiert eine Polyetherkette mit einer Hydroxylgruppe als Endgruppe.

Bewährt haben sich als hydrohile oder latent hydrophile Verbindungen unter anderem Ethylenoxid, Propylenoxid, Polyethylenoxid, Polypropylenoxid, Polyacrylsäure, Polyacrylsäureester, Polyvinylalkohol, Polyvinylamine, Polymethacrylsäureester, Polymethacrylsäure, Polyether, Polyvinyllactame, Polymethacrylamine, Saccharide, Polyacrylamide, Polymethacrylamide, Maleinsäureanhydrid-Copolymere oder Gemische dieser Verbindungen.

Der erfindungsgemäßen Behandlung mit polymeren oder monomeren Verbindungen als hydrophiler oder latent hydrophiler Verbindung ist eine Umsetzung mit Säurechloriden, anorganischen oder organischen Säuren gleichzusetzen. Bei Behandlung mit Säuren bilden sich entsprechende ionische Verbindungen. Bei der Umsetzung von z. B. einer Aminofunktion des Silanderivats mit Essigsäure bildet das entsprechende Ammoniumacetat die hydrophile Oberfläche.

Die hydrophilen oder latent hydrophilen Verbindungen werden zweckmäßig in Lösung, z. B. aus einer wäßrigen oder alkoholischen Lösung aufgebracht. Die Behandlungszeiten betragen 1 bis 60 min, die Temperaturen liegen zwischen 20 und 90 °C.

An die Umsetzungen der Membrane mit dem Silanderivat gemaß Formel I und der hydrophilen oder latent hydrophilen Verbindungen kann sich eine Trocknung bei 20 bis 150 °C, bevorzugt bei 50 bis 130 °C, besonders bevorzugt bei 80 bis 120 °C anschließen. An diese Trocknung kann sich in einigen Fällen eine Hydrolyse oder sonstige chemische Reaktion, z. B. eine Verseifung zur Verbesserung der hydrophilen Eigenschaften anschließen.

Während der Umsetzung der hydrophilen oder latent hydrophilen Verbindung mit der bereits beschichteten Membrane oder auch bei der anschließenden Trocknung erfolgt die Anbindung dieser Verbindung über das Silanderivat an die Membrane. Dies kann chemisch oder rein physikalisch erfolgen. Im Falle der Behandlung von z. B. Aminogruppen des Silanderivats mit Carbonsäureanhydriden oder Carbonsäuren ist neben einer ionischen auch von einer chemischen Bindung über Amidfunktionen auszugehen.

Mittels des erfindungsgemäßen Verfahrens können alle Membrane beschichtet werden, die mit dem Silanderivat oder dessen Lösung verträglich sind. Dies bedeutet, das zumindest die Membranoberfläche aus einem polymeren Material aufgebaut sein muß. Als polymeres Material können im erfindungsgemäßen Verfahren insbesondere Polysiloxane wie Polydimethylsiloxan, Polyurethane, Polyamide, Polyester. Polyethylen, Polypropylen, Polystyrol, Poylvinylchlorid, Synthese- und Naturkautschuk, Polycarbonate oder Polymethylmethacrylat eingesetzt werden. Es können durch gezieltes Eintauchen, Besprühen, Bestreichen oder Bedampfen auch nur bestimmte Teile einer Membrane beschichtet werden.

Erfindungsgemäß beschichtete Membranen finden besonders zur Herstellung von Erzeugnissen auf den Gebieten der Nahrungs- und Genußmitteltechnik, Wassertechnik, Biotechnik, Hygienevorsorge und der Medizintechnik Verwendung: dies ist ebenfalls ein Gegenstand der vorliegenden Erfindung.

Als Erzeugnisse, die ganz oder teilweise mit den erfindungsgemäßen Verfahren beschichtet werden, kommen insbesondere medizintechnische Artikel in Frage.

Medizintechnische Erzeugnisse, die mit erfindungsgemäß hergestellten Membranen hergestellt werden können, sind auch Oxygenierungsmembranen für die Blutwäsche. insbesondere für die extrakorporale Blutwäsche, wie sie im Rahmen einer Dialysebehandlung durchgeführt wird. Weiterhin können die Erzeugnisse Oxygenierungsmembranen sein, die zur Anreicherung des Blutes an Sauerstoff und zur Abreicherung an Kohlendioxid geeignet sind. Diese Membranen finden als künstliche Lunge Anwendung.

Die folgenden Beispiele sollen die vorliegende Erfindung näher erläutern, ohne jedoch ihren Umfang zu beschränken.

### Beispiele

### Herstellung der Beschichtungslösung

### Variante 1

Unter Argon-Schutzgasatmosphäre wird bei Raumtemperatur N-(2-aminoethyl)-3-aminopropyltrimethoxysilan in verschiedenen Konzentrationen mit wasserfreiem n-Hexan gemischt. Die so hergestellte Lösung ist über einen längeren Zeitraum verwendbar.

### Variante 2

Unter Argon-Schutzgasatmosphäre wird bei Raumtemperatur N-(2-aminoethyl)-3-aminopropyltrimethoxysilan in verschiedenen Konzentrationen mit wasserfreiem Cyclohexan gemischt. Die so hergestellte Lösung ist über einen längeren Zeitraum verwendbar.

### Variante 3

Unter Argon-Schutzgasatmosphäre wird bei Raumtemperatur 3-Aminopropyltriethoxysilan in verschiedenen Konzentrationen mit wasserfreiem *n*-Hexan gemischt. Die so hergestellte Lösung ist über einen längeren Zeitraum verwendbar.

### Beispiel 1: Beschichtung von Polysiloxan-Membranen

Eine Polysiloxanmembranfolie (Laboratoire Perouse Implant, Frankreich) wird gründlich mit Wasser und mit Isopropanol gereinigt und bei Raumtemperatur getrocknet. Die so vorbehandelte Membranfolie wird 10 s in eine wie unter 1) beschrieben dargestellte 1.0 Vol%ige Beschichtungslösung getaucht. Es wird bei Raumtemperatur an Luft bis zur Gewichtskonstanz, anschließend 1 h lang bei 110 °C getrocknet.

Nach der ersten Beschichtung wird die Membranfolie 20 min in eine 2.5%ige Lösung von Polyacrylsäure (M_{W}≈2000) in reinem Ethanol getaucht, bei Raumtemperatur getrocknet und anschließend wieder 1 h bei 110 °C getrocknet. Die beschichtete Folie wird ungefähr 4 h bei Raumtemperatur in Wasser extrahiert. Die fertig beschichtete Membranfolie wird vollständig von physiologischer Lösung benetzt (Kontaktwinkel 0°).

### Langzeitstabilität von beschichteten Polysiloxan-Membranfolien

Eine entsprechend Beispiel 1 beschichtete Polysiloxan-Membranfolie wird über mehrere Monate hinweg in steriler phosphatgepufferter physiologischer Lösung gelagert. Die Folie zeigte weder eine Delamination der Beschichtung, noch ändert sich das Benetzungsverhalten.

### Beispiel 2: Beschichtung von Polyethylen-Membranfolien

Polyethylenmembranfolien werden gründlich mit Wasser und mit Isopropanol gereinigt und bei Raumtemperatur getrocknet. Die so vorbehandelten Folien werden 20 s in eine wie unter 1) beschrieben dargestellte 1.0 Vol%ige Beschichtungslösung getaucht. Es wird bei Raumtemperatur an Luft bis zur Gewichtskonstanz, anschließend 1 h lang bei 100 °C getrocknet.

Nach der ersten Beschichtung wird die Folie 20 min in eine 2.5%ige Lösung von Polyacrylsäure (M_{W}≈2000) in reinem Ethanol getaucht, bei Raumtemperatur getrocknet und anschließend wieder 1 h bei 100 °C getrocknet. Die beschichteten Membranfolien werden ungefähr 4 h bei Raumtemperatur in Wasser extrahiert. Die fertig beschichteten Folien werden nun vollständig mit physiologischer Lösung benetzt (Kontaktwinkel 0°).

Neben dem ausgesprochenen hydrophilen Verhalten der so beschichteten Membranfolien weisen diese ein bakterienabweisendes Verhalten auf. Die Adhäsion von Bakterien des Stamms Klebsiella oxytoca wurde zu über 80 % unterdrückt. Die hohe Sauerstoff- und Kohlendioxiddurchlässigkeit der Membranfolie wird durch die Beschichtung nicht beeinträchtigt.

### Beispiel 3: Variation der Tropfendurchmesser in physiologischer Lösung

Polysiloxanmembranfolien (Laboratoire Perouse Implant, Frankreich) werden gründlich mit Wasser und mit Isopropanol gereinigt und bei Raumtemperarur getrocknet. So vorbehandelten Folien werden einzeln 10 s in eine wie unter 1) beschrieben dargestellte 5.0, 2.0, 1.25, 1.0 und 0.5 Vol%ige Beschichtungslösung getaucht. Es wird bei Raumtemperatur an Luft bis zur Gewichtskonstanz, anschließend 1 h lang bei 110 °C getrocknet.

Auf diese Weise beschichtete Membranfolien wurden mit einem Rasterelektronenmikroskop (Fa. Phillips, SEM 515) untersucht. Die Proben wurden vor den Aufnahmen mit Gold/Palladium besputtert, die Vergrößerung betrug jeweils 200 : 1.

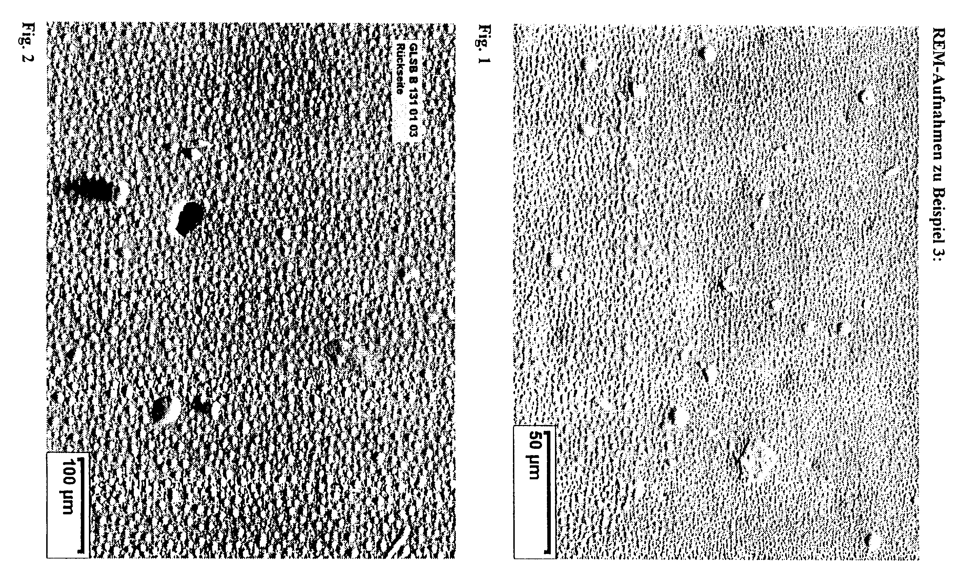

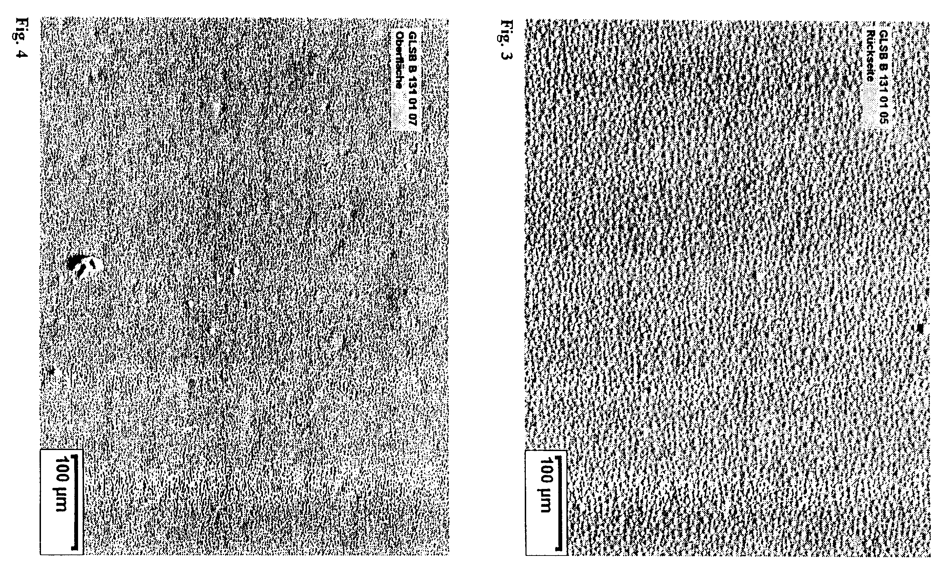

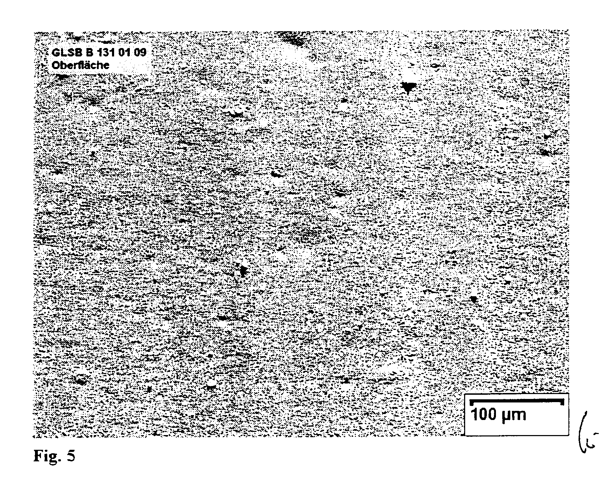

Fig. 1-5 dokumentieren die Abhängigkeit der Tropfengröße und damit der Erhebungen von der Silankonzentration.

**Tabelle 1**

| Silankonzentration [Vol%] | Mittlerer Tropfendurchmesser [µm] | |
|---|---|---|
| 5.0 | 10-20 | Fig. 1 |
| 2.5 | 7-10 | Fig. 2 |
| 1.25 | 3-5 | Fig. 3 |
| 1.0 | 1-2 | Fig. 4 |
| 0.5 | 0.7-1.1 | Fig. 5 |

## Patentansprüche

1. Verfahren zur Herstellung von hydrophilen Beschichtungen auf Membranen,
dadurch gekennzeichnet,
daß die Membrane zunächst mit einem Silanderivat
der Formel I
[Y(R¹Z)ₘR²]ₙSiR³ₒX₄₋ₙ₋ₒ (I)
mit
o = 0 bis 2,
n = 0 bis (3 - o),
m = 0 bis 5
R¹, R², R³ = C₁-C₁₂-Alkylrest, C₂-C₁₂-Alkylenrest, Phenylrest oder Phenylalkylrest,
wobei R² und R³ jeweils gleich oder verschieden zu R¹ sind,
Y = HS-, H₂N-, HR¹N-, R¹₂N-, -Cl, -Br, -I, -CN, R¹S-, 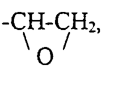 -SO₂Cl, OCN-, -CO₂R¹, -SCN
Z = -S-, -O-, R¹N-, HN-,
X = F-, Cl-, Br-, I-, R⁴O-, HO-, H-, -NR₂¹
mit
R⁴ = C₁-C₆-Alkylrest,
C₂-C₈-Alkoxyrest,
C₅-C₇-cycloaliphatischer Rest,
-C(O)R¹,
-Si(CH₃)₃
Phenylrest oder Phenylalkylrest,
und anschließend mit einer hydrophilen oder latent hydrophilen Verbindung umgesetzt werden, wobei die Oberfläche der Membrane nach der Umsetzung mit dem Silanderivat eine Strukturierung aufweist.

2. Verfahren nach Anspruch 1,
dadurch gekennzeichnet,
daß als hydrophile oder latent hydrophile Verbindung Ethylenoxid, Propylenoxid, Polyethylenoxid, Polypropylenoxid, Polyacrylsäure, Polyacrylsaureester, Polymethacrylsäure, Polymethacrylsäureester, Polyvinylalkohol, Polyvinylamine, Polyether, Polyvinyllactame, Polymethacrylamine, Saccharide, Polyacrylamide, Polymethacrylamide, Maleinsäureanhydrid-Copolymere oder Gemische aus diesen Verbindungen eingesetzt werden.

3. Verfahren nach Anspruch 1,
dadurch gekennzeichnet,
daß als hydrophile oder latent hydrophile Verbindung Säurechloride, anorganische Säuren oder organische Säuren eingesetzt werden.

4. Verfahren nach einem der Ansprüche 1 bis 3,
dadurch gekennzeichnet,
daß nach Umsetzen der Membrane mit dem Silanderivat gemäß Formel I die so erhaltene strukturierte Oberfläche hydrolysiert wird.

5. Verfahren nach einem der Ansprüche 1 bis 4,
dadurch gekennzeichnet,
daß nach Umsetzen der Membrane mit dem Silanderivat gemäß Formel I und einer hydrophilen oder latent hydrophilen Verbindung eine Trocknung bei 20-150 °C durchgeführt wird.

6. Verfahren nach einem der Ansprüche 1 bis 5,
dadurch gekennzeichnet,
daß die Membrane eine Oberfläche aus Polysiloxanen, Polydimethylsiloxan, Polyethylen, Polyamide, Polyurethane, Polyester, Polypropylen, Polystyrol, Poylvinylchlorid, Synthese- und Naturkautschuk, Polycarbonate oder Polymethylmethacrylat aufweisen.

7. Verwendung beschichteter Membranen, hergestellt gemäß den Ansprüchen 1 bis 6 für die Herstellung von Erzeugnissen der Gebiete der Nahrungs- und Genußmitteltechnik, Wassertechnik, Biotechnik, der Hygienevorsorge und insbesondere der Medizintechnik.

8. Erzeugnisse, die ganz oder teilweise gemäß den Ansprüchen 1 bis 6 beschichtet wurden, zur Verwendung der Medizintechnik.

9. Erzeugnisse nach Anspruch 8,
dadurch gekennzeichnet,
daß die Erzeugnisse Oxygenierungsmembranen sind, die zur Anreicherung des Blutes mit Sauerstoff und zur Abreicherung von Kohlendioxid geeignet sind.

10. Erzeugnisse nach Anspruch 8,
dadurch gekennzeichnet,
daß die Erzeugnisse Oxygenierungsmembranen für die Blutwäsche sind.
